# EUROPÄISCHE PATENTSCHRIFT

(11) **EP 2 683 022 B1**
(45) Veröffentlichungstag und Bekanntmachung des Hinweises auf die Patenterteilung: **25.04.2018**
(21) Anmeldenummer: 12175007.9
(22) Anmeldetag: 04.07.2012
(51) Int. Cl.: G01F 23/284, H01P 1/08, H01P 5/02, G01F 23/00

(54) **Gasdichte Hohlleitereinkopplung, Hochfrequenzmodul, Füllstandradar und Verwendung**
Gas tight wave guide coupling, high frequency module, filling level radar and use
Couplage de guides d'ondes imperméable au gaz, module de haute fréquence, radar de niveau de remplissage et utilisation

(43) Veröffentlichungstag der Anmeldung: 08.01.2014
(73) Patentinhaber: VEGA Grieshaber KG, 77709 Wolfach (DE)
(72) Erfinder: Schultheiss, Daniel, 78132 Hornberg (DE); Weinzierle, Christian, 77709 Wolfach (DE)
(74) Vertreter: Maiwald Patentanwalts GmbH

(56) Entgegenhaltungen:
- WO-A1-2007/017170
- DE-A1- 4 341 052
- GB-A- 2 187 336
- US-A- 3 860 891
- US-A- 5 539 361
- US-A1- 2002 066 314
- US-A1- 2003 151 560

## Beschreibung

### Gebiet der Erfindung

Die Erfindung betrifft die Füllstandmessung. Insbesondere betrifft die Erfindung eine gasdichte Hohlleitereinkopplung zum Einkoppeln eines elektromagnetischen Signals von einem Hochfrequenzmodul in einen Hohlleiter, ein Hochfrequenzmodul mit einer gasdichten Hohlleitereinkopplung, ein Füllstandradar mit einem Hochfrequenzmodul und die Verwendung einer gasdichten Hohlleitereinkopplung in einem Feldgerät.

### Technischer Hintergrund

Feldgeräte, insbesondere Feldgeräte, welche mit Sensoren zur Messung von Füllständen oder Grenzständen eingesetzt werden, basieren oftmals auf Laufzeitmessungen. Bei den Laufzeitmessungen werden die Signallaufzeiten von Radarsignalen oder von geführten Mikrowellenpulsen bestimmt. Aus diesen Signallaufzeiten wird dann die gewünschte Messgröße ermittelt.

Die Signale weisen eine bestimmte Frequenz und Dauer auf. Die Radarsignale und die Mikrowellensignale lassen sich dem Bereich der Hochfrequenztechnik (HF-Technik) zuordnen. Als Signale, die im Bereich der Hochfrequenztechnik liegen, werden im Regelfall Signale im Frequenzbereich bis 2 GHz als geführte Mikrowellensignale verwendet und Signale im Bereich von 5 GHz bis 79 GHz und darüber hinaus als Radarsignale eingesetzt.

Aus Sicherheitsgründen kann es erforderlich sein, dass die Elektronik des Feldgeräts von der Messumgebung (also beispielsweise dem Inneren eines mit einem Füllmedium gefüllten Behälters) explosionsschutztechnisch getrennt ist. Die Trennung besteht beispielsweise aus einer gasdichten Abdichtung. Hierdurch kann vermieden werden, dass explosionsfähige Substanzen bzw. Gasgemische vom Behälterinneren zur Elektronik des Feldgerätes gelangen und sich dort entzünden.

EP 2 093 846 A1 beschreibt eine gasdichte Leiterdurchführung für ein Feldgerät, welche einen solchen Explosionsschutz bereitstellen kann. Die Leiterdurchführung ist in Koaxialtechnik ausgeführt und wird beispielsweise in einem Frequenzbereich zwischen 5 und 28 GHz eingesetzt.

US 2003/0151560 A1 beschreibt ein Füllstandradar mit einer Hornantenne und einem planaren Strahlerelement.

WO 2007/017170 A1 beschreibt ein Füllstandradar mit einer Hornantenne und ein Füllstandradar mit einer Parabolantenne. Es ist eine Potenzialtrennung vorgesehen, die am Anfangsbereich der Antenne angeordnet ist.

US 3,860,891 A beschreibt ein Mikrowellen-Wellenleiterfenster, das stufenförmig ausgeführt sein kann.

DE 43 41 052 A1 beschreibt eine Hohlleiterverbindung zum Verbinden von zwei Hohlleitern mit unterschiedlichen Querschnitten.

### Zusammenfassung der Erfindung

Es ist eine Aufgabe der Erfindung, ein Feldgerät mit Explosionsschutz bereitzustellen, welches für Sendefrequenzen von über 60 GHz gut geeignet ist.

Gemäß einem ersten Aspekt der Erfindung ist eine gasdichte Hohlleitereinkopplung (auch Hohlleiteranschluss genannt) zum Einkoppeln eines elektromagnetischen Signals von einem Hochfrequenzmodul in einen Hohlleiter angegeben. Das elektromagnetische Signal wird hierbei von dem Hochfrequenzmodul erzeugt, von einem planaren Strahlerelement der Hohlleiterkopplung, das auf einem Träger angeordnet ist, abgestrahlt und dann von dem Hohlleiter übertragen.

Die Hohlleitereinkopplung weist ein dielektrisches Dichtungselement (111) auf, welches den Hohlleiter (104, 105) gasdicht abdichtet.

Der Hauptbereich des Hohlleiters ist beispielsweise zylindrisch ausgeführt. Es kann sich aber auch um einen Rechteckhohlleiter handeln. Beispielsweise weist der Hohlleiter entlang des Hauptbereichs einen konstanten Innendurchmesser auf.

Das elektromagnetische Signal, das von dem planaren Strahlerelement abgestrahlt wird, kann auch als Sendesignal bezeichnet werden. Das planare Strahlerelement kann darüber hinaus auch ausgeführt sein, das Empfangssignal aufzunehmen, bei welchem es sich (im Falle eines Füllstandmessgeräts, das nach dem Laufzeitprinzip arbeitet) um das reflektierte Sendesignal handelt, welches u. a. an der Füllgutfläche reflektiert wurde. Das planare Strahlerelement kann auch als ein Array aus mehreren Strahlerelementen ausgeführt sein.

Bei dem Träger handelt es sich beispielsweise um eine Leiterplatte.

Der Hohlleiter, der zum Übertragen des abgestrahlten Signals ausgeführt ist, kann mit dem Träger gasdicht verbunden sein. Weiterhin weist die Hohlleitereinkopplung ein dielektrisches Dichtungselement auf, welches den Hohlleiter in seinem Inneren gasdicht abschließt. In anderen Worten trennt dieses Dichtungselement einen vorderen Bereich des Hohlleiters, der sich im Bereich des planaren Strahlerelements befindet, von einem hinteren Bereich des Hohlleiters, der sich im Bereich des Sondenendes (bzw. des Hohlleiters) befindet, also in Richtung Messumgebung.

Gemäß einer weiteren Ausführungsform der Erfindung ist das dielektrische Dichtungselement aus einer Leiterplatte hergestellt, beispielsweise ausgefräst.

Gemäß einer weiteren Ausführungsform der Erfindung ist das dielektrische Dichtungselement ein zylindrisches Kunststoffteil.

Gemäß einer weiteren Ausführungsform der Erfindung ist das dielektrische Dichtungselement ein kegelförmiges, pyramidenförmges, doppelkegelförmiges oder doppelpyramidenförmiges Kunststoffteil, welches darüber hinaus einen zylindrischen Bereich aufweist, an welchem das Dichtungselement mit dem Hohlleiter gasdicht verbunden ist.

Gemäß einer weiteren Ausführungsform der Erfindung weist das dielektrische Dichtungselement eine stufenförmige Oberfläche auf.

Gemäß einer weiteren Ausführungsform der Erfindung weist der Bereich des Dichtungselements, an welchem das Dichtungselement mit dem Hohlleiter gasdicht verbunden ist, eine metallische Beschichtung auf, um eine gasdichte Löt- oder Klebeverbindung mit dem Hohlleiter auszubilden. Im Falle einer Klebeverbindung mit dem Hohlleiter kann (muss aber nicht) die metallische Beschichtung ebenfalls vorgesehen sein. Insbesondere kann der Kleber selber metallisch sein.

Gemäß einer weiteren Ausführungsform der Erfindung weist das dielektrische Dichtungselement einen Sekundärstrahler auf, der an dem Dichtungselement angebracht ist oder in das Dichtungselement integriert ist, und welcher das von dem planaren Strahlerelement abgestrahlte Signal aufnimmt und wieder abstrahlt. Ebenso kann der Sekundärstrahler das reflektierte Empfangssignal aufnehmen und in Richtung des planaren Strahlerelements abstrahlen.

Gemäß einer weiteren Ausführungsform der Erfindung ist das planare Strahlerelement in dem oder unmittelbar vor dem Anfangsbereich des Hohlleiters angeordnet, so dass sich das abgestrahlte Signal zunächst im Anfangsbereich des Hohlleiters befindet und in Richtung des Hauptbereichs des Hohlleiters wandert.

Wesentlich in dieser Ausführungsform ist, dass sich der Anfangsbereich des Hohlleiters zum planaren Strahlerelement hin aufweitet. In anderen Worten ist der Innendurchmesser des Anfangsbereichs des Hohlleiters im Übergangsbereich zum Hauptbereich des Hohlleiters (also an der Stelle, an der Anfangsbereich und Hauptbereich aufeinandertreffen) genauso groß, wie der Innendurchmesser des Hauptbereichs, wohingegen der Innendurchmesser des Anfangsbereichs zum planaren Strahlerelement hin größer wird.

Auf diese Weise wird erreicht, dass das planare Strahlerelement eine verhältnismäßig große Abstrahlfläche und somit einen verhältnismäßig großen Durchmesser aufweisen kann. Hierdurch kann die Qualität des Signals verbessert werden.

Im Folgenden sollen noch einmal die Begriffe "Anfangsbereich" und "Hauptbereich" des Hohlleiters definiert werden. Der Anfangsbereich des Hohlleiters befindet sich an dem Ende des Hohlleiters, in dessen Bereich sich das planare Strahlerelement befindet. Dieser Anfangsbereich ist zum planaren Strahlerelement hin aufgeweitet und verjüngt sich somit in Richtung des Hauptbereichs des Hohlleiters. In anderen Worten wird der Innendurchmesser des Anfangsbereichs in Richtung Hauptbereich stetig oder schrittweise (unstetig) kleiner. Der minimale Durchmesser des Anfangsbereichs befindet sich an der Schnittstelle zwischen Anfangsbereich und Hauptbereich. An dieser Stelle sind die Innendurchmesser von Anfangsbereich und Hauptbereich gleich groß.

Der Hauptbereich des Hohlleiters weist beispielsweise einen konstanten Innendurchmesser auf und erstreckt sich von der Schnittstelle zwischen Anfangsbereich und Hauptbereich bis zum anderen Ende des Hohlleiters.

Beispielsweise weist der Hauptbereich einen runden oder rechteckigen Innenquerschnitt auf.

Das (Sende)Signal, welches von dem planaren Strahlerelement abgestrahlt wird, wandert in Abstrahlrichtung vom planaren Strahlerelement durch das vom Anfangsbereich definierte, für den Signaltransport zuständige Innenvolumen und in den Hauptbereich des Hohlleiters hinein und dann weiter in Richtung Hohlleiterende bzw. Hohlleiterausgang.

Gemäß einer Ausführungsform der Erfindung ist der Hauptbereich des Hohlleiters in Abstrahlrichtung des Signals beabstandet zu dem planaren Strahlerelement angeordnet. In anderen Worten legt das Signal zunächst eine gewisse Distanz innerhalb des Anfangsbereichs des Hohlleiters zurück, bevor es den Hauptbereich des Hohlleiters betritt.

Gemäß einer weiteren Ausführungsform der Erfindung weist die Innenseite des Anfangsbereichs des Hohlleiters einen konischen Verlauf auf. In anderen Worten ist das durch den Anfangsbereich des Hohlleiters definierte Innenvolumen trichterförmig.

Gemäß einer weiteren Ausführungsform der Erfindung weist die Innenseite des Anfangsbereichs des Hohlleiters einen hyperbolischen Verlauf auf.

Gemäß einer weiteren Ausführungsform der Erfindung weist die Innenseite des Anfangsbereichs einen stufenförmigen Verlauf auf.

Gemäß einer weiteren Ausführungsform der Erfindung ist der Innendurchmesser des planaren Strahlerelements größer als der Innendurchmesser des zylindrischen Hauptbereichs des Hohlleiters.

Gemäß einer weiteren Ausführungsform der Erfindung ist der Durchmesser des planaren Strahlerelements geringer als die Hälfte oder gar ein Drittel des maximalen Innendurchmessers des Anfangsbereichs des Hohlleiters.

Gemäß einer weiteren Ausführungsform der Erfindung weist der Hohlleiteranschluss bei der Frequenz des Signals von 79 GHz eine relative Bandbreite von über 5 % auf, beispielsweise sogar von über 8 %.

Gemäß einer weiteren Ausführungsform der Erfindung ist das planare Strahlerelement ein rechteckiges, rundes, elliptisches oder dreieckiges Patchelement, das von einer Microstripleitung gespeist wird.

Gemäß einem weiteren Aspekt der Erfindung ist ein Hochfrequenzmodul zur Erzeugung eines Messsignals für ein Feldgerät, beispielsweise ein Füllstandmessgerät, angegeben, wobei das Hochfrequenzmodul eine oben und im Folgenden beschriebene Hohlleitereinkopplung aufweist.

Gemäß einem weiteren Aspekt der Erfindung ist ein Füllstandradar mit einem oben und im Folgenden beschriebenen Hochfrequenzmodul angegeben.

Gemäß einem weiteren Aspekt der Erfindung ist die Verwendung einer oben und im Folgenden beschriebenen Hohlleitereinkopplung in einem Feldgerät angegeben. Bei dem Feldgerät handelt es sich beispielsweise um ein Füllstandmessgerät, das Laufzeitmessungen vornimmt, um daraus den Füllstand zu bestimmen. Bei den hierfür verwendeten Signalen kann es sich um elektromagnetische Signale, wie Mikrowellen- oder Radarsignale, handeln. Insbesondere können diese Signale gepulst sein. Es können aber auch kontinuierliche Signale verwendet werden.

Ein erster Kerngedanke der Erfindung kann darin gesehen werden, dass der Hohlleiter eines Feldgeräts einen Explosionsschutz aufweist, indem sein Anfangsbereich (also der Bereich, in den das Sendesignal eingekoppelt wird) gegenüber der Messumgebung gasdicht abgedichtet ist. Dies erfolgt, indem er einerseits mit dem Trägermaterial des planaren Strahlerelements (Signalquelle) gasdicht verbunden ist und andererseits ein in seinem Innenbereich eingeklebtes oder eingelötetes Abdichtungsteil (Dichtungselement) aufweist.

Ein anderer Aspekt der Erfindung kann darin gesehen werden, dass der Übergang zwischen dem planaren Strahlerelement zum Hohlleiter zum planaren Strahlerelement hin aufgeweitet ist, beispielsweise konisch, gestuft oder hyperbolisch.

### Kurze Beschreibung der Figuren

Fig. 1 zeigt eine Querschnittsdarstellung einer Hohlleitereinkopplung gemäß einem Ausführungsbeispiel der Erfindung.
Fig. 2 zeigt eine Querschnittsansicht einer Hohlleitereinkopplung gemäß einem weiteren Ausführungsbeispiel der Erfindung.
Fig. 3 zeigt eine Querschnittsansicht einer Hohlleitereinkopplung gemäß einem weiteren Ausführungsbeispiel der Erfindung.
Fig. 4 zeigt eine Querschnittsansicht einer Hohlleitereinkopplung gemäß einem weiteren Ausführungsbeispiel der Erfindung.
Fig. 5 zeigt ein dielektrisches Dichtungselement gemäß einem Ausführungsbeispiel der Erfindung.
Fig. 6 zeigt ein dielektrisches Dichtungselement gemäß einem weiteren Ausführungsbeispiel der Erfindung.
Fig. 7 zeigt ein Füllstandmessgerät gemäß einem Ausführungsbeispiel der Erfindung.
Fig. 8 zeigt vier Beispiele für planare Strahlerelemente, welche in einer Hohlleitereinkopplung gemäß Ausführungsbeispielen der Erfindung eingesetzt werden können.

### Detaillierte Beschreibung von Ausführungsbeispielen

Die Darstellungen in den Figuren sind schematisch und nicht maßstäblich. Werden in verschiedenen Figuren die selben Bezugszeichen verwendet, so können diese gleiche oder ähnliche Elemente bezeichnen. Gleiche oder ähnliche Elemente können aber auch durch unterschiedliche Bezugszeichen bezeichnet sein.

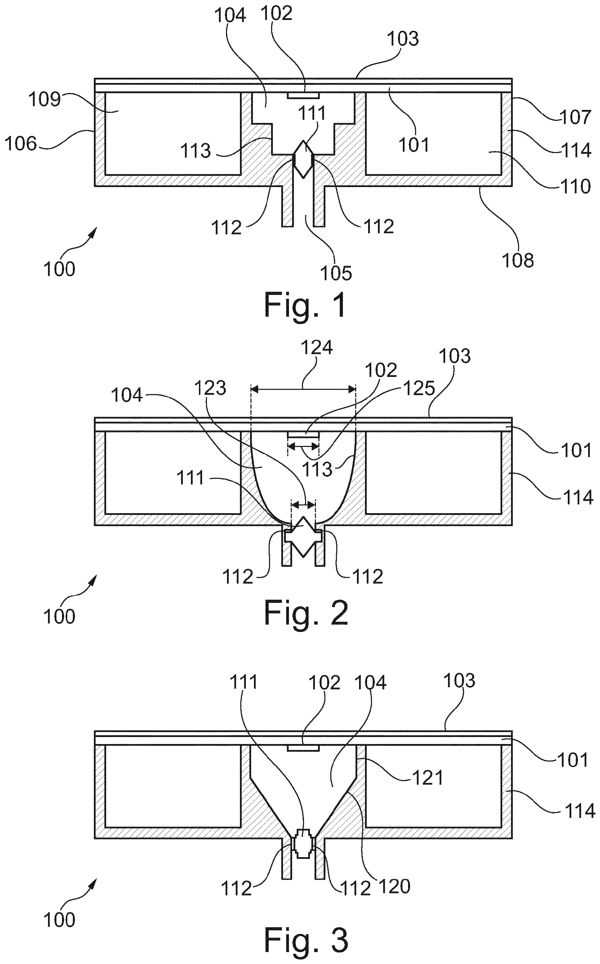

Fig. 1 zeigt eine Querschnittsansicht einer Hohlleitereinkopplung 100 gemäß einem Ausführungsbeispiel der Erfindung. An dieser Stelle sei angemerkt, dass die in den Figuren 1 bis 4 gezeigten Hohlleitereinkopplungen beispielsweise an das Hochfrequenzmodul angeschlossen werden. Das Hochfrequenzmodul kann aber auch Teil der hier und im Folgenden als Hohlleitereinkopplung bezeichneten Vorrichtung 100 sein. In diesem Falle könnte die Vorrichtung 100 auch als Hochfrequenzmodul mit Hohlleitereinkopplung bezeichnet werden.

Insbesondere kann die Hohlleitereinkopplung Teil der Messsonde sein. Alternativ weist sie eine Schnittstelle im Bereich der Bezugsziffer 105 auf, an welche der weiterführende Hohlleiter der Messsonde angeschlossen werden kann.

Die Hohlleitereinkopplung 100 weist ein hochfrequenztaugliches Gehäuse 114 auf. Dieses HF-Gehäuse 114 weist den Hohlleiter 104, 105 auf. In anderen Worten ist der Hohlleiter 104, 105 in das HF-Gehäuse integriert.

Darüber hinaus kann das Gehäuse, nicht zuletzt aus Stabilitätsgründen, aber auch aus Gründen der besseren Abdichtung, Seitenwände 106, 107 aufweisen, sowie eine Rückwand 108. Der Hohlleiter 104, 105 führt durch die Rückwand 108 hindurch in Richtung des planaren Strahlerelements 102, welches sich auf der Unterseite des Trägers 101 befindet, also im Inneren des HF-Gehäuses angeordnet ist. Auf der Oberseite des Trägers 101 befindet sich eine metallische Beschichtung, welche als Massefläche dienen kann.

Das HF-Gehäuse 114 kann beispielsweise rotationssymmetrisch oder rechteckig ausgeführt sein. Im Falle der rotationssymmetrischen Ausführung sind somit zwei konzentrisch angeordnete, rotationssymmetrische Bereiche 106, 107 und 104, 105 vorgesehen.

Der innere rotationssymmetrische Bereich 104, 105 besteht aus dem Anfangsbereich 104 des Hohlleiters und dem Hauptbereich 105 des Hohlleiters.

Beide Bereiche definieren einen Hohlraum, der für die Übertragung der Signale zuständig ist.

Der Innenraum des Anfangsbereichs 104 weist im Ausführungsbeispiel der Fig. 1 eine stufenförmige Form auf (hier zwei Stufen; es können aber auch mehr Stufen sein). Die stufenförmige Innenfläche 113 des Außenbereichs 104 weitet sich in Richtung des planaren Strahlerelements 102 auf und verjüngt sich in Richtung des Hauptbereichs 105 des Hohlleiters. Am oberen Ende des Hauptbereichs 105 des Hohlleiters, dort, wo der Hauptbereich auf den Anfangsbereich trifft, befindet sich ein Dichtungselement 111, welches beispielsweise aus dielektrischem Material besteht und an der Stelle, wo es die Innenwandung des Hohlleiters 105 berührt, metallisch beschichtet ist (siehe Bezugszeichen 112).

Im Ausführungsbeispiel der Fig. 1 ist dieses Dichtungselement 111 in Form eines Doppelkegels ausgeführt, mit einem zylindrischen Bereich zwischen den beiden Kegeln. Die Außenfläche dieses zylindrischen Bereichs ist metallisch beschichtet, so dass das Dichtungselement auf die Innenwand des Hauptbereichs 105 des Hohlleiters aufgelötet oder aufgeschweißt werden kann.

Auch kann das Dichtungselement 111 aufgeklebt werden.

Zwischen dem Innenring, der durch den Hohlleiter 104, 105 gebildet wird, und dem Außenring 106, 107 des Gehäuses kann sich ein Hohlraum 109, 110 befinden.

Die Hohlleitereinkopplung 100 kann als Hohlleiteranschluss verwendet werden. In anderen Worten kann ein Hohlleiter an dem unteren Bereich 105 angeschlossen werden.

Der Hohlleiteranschluss 100 kann gasdicht ausgeführt sein und für die Verwendung mit einem Mikrowellenmodul in Streifenleitertechnologie im Frequenzbereich von ca. 79 GHz ausgeführt sein. Insbesondere ist der Hohlleiteranschluss in das HF-Gehäuse 114 integriert.

Der Träger 101, bei dem es sich um eine Leiterplatte handeln kann, ist mit dem HF-Gehäuse 114 gasdicht verbunden. Beispielsweise ist das HF-Gehäuse auf den Träger aufgeklebt.

Auf diese Weise können die inneren Hohlräume 109, 104, 110 gegenüber der Umgebung gasdicht abgedichtet werden.

Bei dem oben und im Folgenden beschriebenen Dichtungselement kann es sich um ein Kunststoffteil, ein Keramikteil oder ein Glasteil handeln. Dieses Dichtungselement ist in den Hauptbereich des Hohlleiters eingeklebt oder dort angelötet.

Der Übergang von der signalerzeugenden Elektronik auf den Hohlleiter erfolgt mittels Microstripleitung und einer daran angeschlossenen Patchantenne, bei der es sich um das planare Strahlerelement handelt.

Die Aufweitung des Hohlleiters zur planaren Struktur hin ist konisch, hyperbolisch oder gestuft. Insbesondere können Hohlleiter und HF-Gehäuse einteilig ausgeführt sein.

Hierdurch ergibt sich eine einfache und kostengünstige mechanische Konstruktion mit wenig Einzelteilen. Die Anordnung weist gute Hochfrequenzeigenschaften mit geringer Durchgangsdämpfung und hoher Reflexionsdämpfung auf.

Im Folgenden wird der Microstrip-zu-Hohlleiter Übergang beispielhaft beschrieben:
Auf der Leiterplatte wird eine planare Struktur in Form eines planaren Strahlerelements 102 (z. B. eine Patchantenne) aufgebracht, die hauptsächlich orthogonal zur Trägerplatte 101 abstrahlt. Über diese planare Struktur wird der Hohlleiter 104, 105 platziert, der entsprechend des zu übertragenden Frequenzbereichs dimensioniert ist. Dieser Hohlleiter wird zur Leiterplatte hin soweit aufgeweitet, dass die Hohlleiterwände einen ausreichend großen Abstand zu der planaren Struktur aufweisen, so dass eine Beeinflussung des Sendesignals durch die Wände reduziert wird.

Andere Einkopplungen in einen Hohlleiter erfordern ein hohes εᵣ des Leiterplattenmaterials, damit die planare Struktur klein genug ausgeführt sein kann, um durch die Hohlleiterwände nicht gestört zu werden. Ein hohes εᵣ kann jedoch in einer verminderten relativen Bandbreite der Anordnung resultieren, die beispielsweise zwischen 1 % und 3 % liegen kann Dies kann für ein breitbandiges Radarsystem nachteilig sein. Unter "relativer Bandbreite" ist das Verhältnis der Bandbreite zur Mittenfrequenz des Sendesignals zu verstehen.

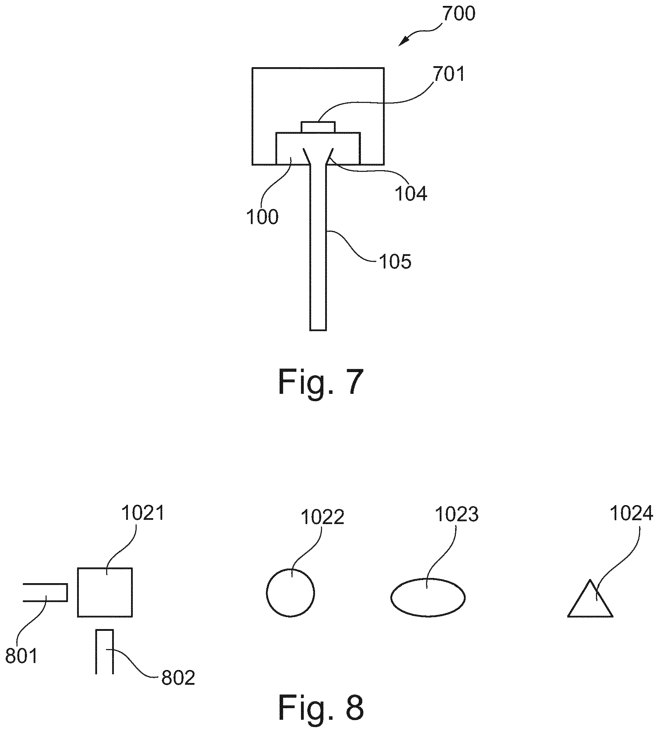

Durch die Aufweitung des Hohlleiters zum planaren Element hin kann ein Leiterplattensubstrat mit niedrigem εᵣ verwendet werden, wodurch die relative Bandbreite auf ca. 8 % angehoben werden kann. εᵣ liegt in diesem Fall beispielsweise zwischen 1,8 und 3,5.
Das planare Element 102 kann beispielsweise ein rechteckiges Patchelement 1021, ein rundes Patchelement 1022, ein elliptisches Patchelement 1023 oder ein dreieckiges Patchelement 1024 sein (siehe Fig. 8).

Das Patchelement kann von der oder den zuführenden Leitungen 801, 802 (Microstripleitungen) direkt, über ein Anpassnetzwerk oder indirekt (über eine elektromagnetische Kopplung) gespeist werden. Ein Beispiel für eine indirekte Einspeisung ist links in der Fig. 8 gezeigt.

Die Aufweitung des Hohlleiters zum planaren Element hin kann konisch, gestuft oder hyperbolisch erfolgen.

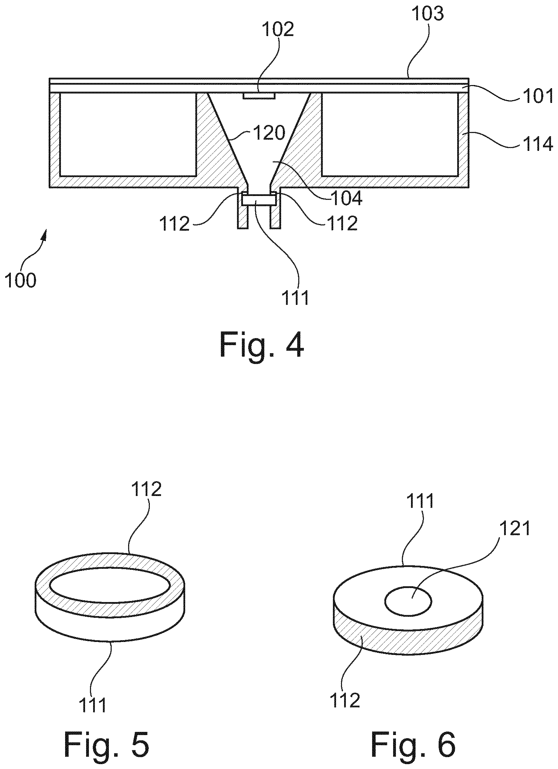

Fig. 2 zeigt ein Beispiel für eine hyperbolische Aufweitung, Fig. 3 ein Beispiel für eine zunächst konische Aufweitung, gefolgt von einem zylindrischen Bereich 121, dessen Ende auf die Trägerplatte 101 aufgeklebt ist, und Fig. 4 zeigt ein Beispiel für eine vollständig zylindrische Aufweitung 120.

In Fig. 2 ist darüber hinaus gezeigt, dass der Durchmesser 125 des Strahlerelements 102 deutlich geringer ist als der maximale Durchmesser 124 des Anfangsbereichs 104 des Hohlleiters. Der minimale Innendurchmesser 123 des Anfangsbereichs des Hohlleiters hingegen entspricht dem Innendurchmesser des Hauptbereichs des Hohlleiters.

Dies trifft für alle Ausführungsbeispiele zu.

Im Folgenden wird der Aspekt der gasdichten Abtrennung (Explosionsschutz) näher beschrieben:
Die gasdichte Abtrennung eines HF-Moduls (bzw. einer elektronischen Schaltung allgemein) gegenüber der Umgebung erfolgt aus Gründen des Explosionsschutzes. Eine gasdichte Abtrennung kann beispielsweise durch einen Verguss der Elektronik erfolgen. Im Bereich der Hochfrequenz und speziell bei der Mikrowellentechnik hat der Verguss jedoch einen erheblichen Einfluss auf die HF-Eigenschaften der Schaltung. Aus diesem Grund wird das HF-Gehäuse 114 dicht auf die Trägerplatte (beispielsweise eine Leiterplatte) geklebt, so dass sich über der Trägerplatte 101 Luft befindet. Diese Baugruppe wird dann wiederum vergossen. Das HF-Signal wird mittels einer gasdichten Auskopplung durch das Gehäuse und den Verguss nach außen geführt, beispielsweise in Richtung Füllgut.

Insbesondere in einem Frequenzbereich von 60 GHz und darüber hinaus bietet sich der Einsatz einer gasdichten Durchführung in einem Hohlleiter an. Diese wird dadurch erreicht, dass ein dielektrisches Dichtungselement 111 in den Hohlleiter eingeklebt oder zuerst teilweise metallisiert und anschließend eingelötet wird.

Das Dielektrikum 111 kann dabei verschiedene Formen annehmen. Beispielsweise kann es in Form einer ebenen Scheibe aus Leiterplattenmaterial ausgeführt sein, welche eine metallisierte Randauflage zur Lötverbindung mit dem Hohlleiter aufweist. Dies ist beispielsweise in der Fig. 4 gezeigt.

Hierzu kann eine runde Scheibe aus einem Leiterplattensubstrat (beispielsweise HF-Substrate aus PTFE- oder PTFE-Keramikgemischen, wie z. B. Rogers RT Duroid 5880, Rogers RO 3003, usw.) gefertigt werden. Diese Scheiben weisen dann beispielsweise einen metallisierten Rand auf, der im normalen Leiterplattenprozess hergestellt werden kann.

Wahlweise kann während des Leiterplattenfertigungsprozesses ein Sekundärstrahler auf die Scheibe in Form von Schlitzen oder metallisierten Strukturen aufgebracht werden.

Die Scheibe kann entweder im zylindrischen oder im aufgeweiteten Teil des Hohlleiters eingebaut werden.

An dieser Stelle sei daraufhingewiesen, dass das Dichtungselement 111 generell nicht zwingend im Hauptbereich 105, sondern auch im aufgeweiteten Bereich 104 angeordnet sein kann, obgleich dies in den Figuren nicht gezeigt ist.

Auch kann das dielektrische Dichtungselement als zylindrisches Kunststoffteil mit einer Metallisierung am Umfang zur Lötverbindung mit dem Hohlleiter ausgeführt sein (vgl. Fig. 6) und insbesondere kann es in diesem Fall im zylindrischen Teil (Hauptbereich) des Hohlleiters angebracht werden.

Auch kann das Dichtungselement als doppelkegelförmiges Kunststoffteil mit Zylinderansatz und einer Metallisierung am Umfang zur Lötverbindung mit dem Hohlleiter und zur Anordnung im zylindrischen Teil ausgeführt sein (vgl. Fig. 1 und 2).

Auch kann das Dichtungselement als gestuftes zylindrisches Kunststoffteil mit Metallisierung am Umfang zur Lötverbindung mit dem Hohlleiter ausgeführt sein (vgl. Fig. 3).

Fig. 2 zeigt die Ausführung des Dichtungselements als Doppelzylinder (ähnlich wie in Fig. 1), wobei jedoch der Zwischenbereich zwischen den beiden Zylindern einen größeren Durchmesser aufweist als die Zylinderbasis (im Gegensatz zur Fig. 1, in der die Durchmesser gleich sind).

Fig. 5 und Fig. 6 zeigen zwei Beispiele für ein dielektrisches Dichtungselement 111. Im Fall der Fig. 5 weist das dielektrische Dichtungselement eine ringförmige metallische Beschichtung 112 auf dessen Ober- und/oder Unterseite auf. Eine solche Beschichtung 112 ist beispielsweise auch in den Figuren 2 und 4 zu sehen.

Im Ausführungsbeispiel der Fig. 6 weist das Dichtungselement 111 eine umlaufende Beschichtung 112 auf dessen Umfangsfläche auf, wie dies auch in den Ausführungsbeispielen der Figuren 1 und 3 vorgesehen ist.

Darüber hinaus können die Dichtungselemente 111 einen Sekundärstrahler 121 aufweisen, der sich auf der Oberseite (wie in Fig. 6) und/oder auf der Unterseite oder im Inneren des Dichtungselements 111 befindet. Der Sekundärstrahler dient dazu, von dem planaren Strahlerelement 102 gespeist zu werden. Dies erfolgt, indem das planare Strahlerelement 102 das Signal aussendet, welches in den Sekundärstrahler eingespeist wird, der daraufhin ein entsprechendes Signal in den Hauptbereich des Hohlleiters 104 abstrahlt.

Fig. 7 zeigt ein Füllstandmessgerät 700, welches ein Hochfrequenzmodul 701 aufweist. Das Hochfrequenzmodul 701 erzeugt das Sendesignal, welches dann in den Hohlleiter 104, 105 eingespeist wird.

Ergänzend sei daraufhingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Gasdichte Hohlleitereinkopplung (100) zum Einkoppeln eines elektromagnetischen Signals von einem Hochfrequenzmodul (701) in einen Hohlleiter (104, 105), die Hohlleitereinkopplung aufweisend:
ein planares Strahlerelement (102), das auf einem Träger (101) angeordnet ist, und zum Abstrahlen des Signals dient;
ein Gehäuse (106, 107, 108, 114), das mit dem Träger (101) gasdicht verbunden ist und einen Hohlleiter (104, 105) aufweist, der zum Übertragen des abgestrahlten Signals ausgeführt ist;
wobei der Hohlleiter (104, 105) einen Anfangsbereich und einen sich daran anschließenden Hauptbereich mit konstantem Innendurchmesser aufweist, der ein dielektrisches Dichtungselement (111) aufweist, welches den Hohlleiter (104, 105) gasdicht abdichtet.

2. Hohlleitereinkopplung nach Anspruch 1,
wobei das dielektrische Dichtungselement (111) aus einer Leiterplatte hergestellt ist.

3. Hohlleitereinkopplung nach einem der vorhergehenden Ansprüche,
wobei das dielektrische Dichtungselement (111) ein zylindrisches oder rechteckiges Kunststoffteil ist.

4. Hohlleitereinkopplung nach einem der vorhergehenden Ansprüche,
wobei das dielektrische Dichtungselement (111) ein kegelförmiges, pyramidenförmiges, doppelkegelförmiges oder doppelpyramidenförmiges Kunststoffteil ist, welches darüber hinaus einen zylindrischen oder rechteckigen Bereich aufweist, an welchem das Dichtungselement mit dem Hohlleiter gasdicht verbunden ist.

5. Hohlleitereinkopplung nach einem der vorhergehenden Ansprüche,
wobei das dielektrische Dichtungselement (111) eine stufenförmige Oberfläche aufweist.

6. Hohlleitereinkopplung nach einem der vorhergehenden Ansprüche,
wobei der Bereich des Dichtungselements (111), an welchem das Dichtungselement mit dem Hohlleiter gasdicht verbunden ist, eine metallische Beschichtung aufweist, um eine gasdichte Löt- oder Klebeverbindung mit dem Hohlleiter (105) auszubilden.

7. Hohlleitereinkopplung nach einem der vorhergehenden Ansprüche,
wobei das Dichtungselement (111) einen Sekundärstrahler (121) aufweist, der durch das planare Strahlerelement (102) gespeist wird, und das entsprechende Signal dann in den Hohlleiter abstrahlt.

8. Hohlleitereinkopplung nach einem der vorhergehenden Ansprüche,
wobei der Hohlleiter (104, 105) zum Übertragen des abgestrahlten Signals von einem durch einen Anfangsbereich (104) des Hohlleiters definierten Volumen entlang eines durch einen Hauptbereich (105) des Hohlleiters definierten Volumen ausgeführt ist;
wobei das planare Strahlerelement (102) in dem oder unmittelbar vor dem Anfangsbereich (104) angeordnet ist;
wobei ein Innendurchmesser (123) des Anfangsbereichs (104) des Hohlleiters im Übergangsbereich zum Hauptbereich des Hohlleiters dieselbe Größe aufweist, wie ein Innendurchmesser (123) des Hauptbereichs, und zum planaren Strahlerelement hin größer wird.

9. Hohlleitereinkopplung nach Anspruch 8,
wobei der Durchmesser (125) des planaren Strahlerelements größer ist als der Innendurchmesser (123) des Hauptbereichs des Hohlleiters (104, 105).

10. Hohlleitereinkopplung nach einem der vorhergehenden Ansprüche,
wobei der Hohlleiter (104, 105) in dem Gehäuse (106, 107, 108) integriert ist und wobei Gehäuse (106, 107, 108) und Hohlleiter (104, 105) einstückig ausgeführt sind.

11. Hochfrequenzmodul (701) zur Erzeugung eines Messsignals für ein Füllstandmessgerät (700), das Hochfrequenzmodul aufweisend:
eine Hohlleitereinkopplung (100) nach einem der Ansprüche 1 bis 10.

12. Füllstandradar (700) mit einem Hochfrequenzmodul nach Anspruch 11.

13. Verwendung einer Hohlleitereinkopplung (100) nach einem der Ansprüche 1 bis 10 in einem Feldgerät (700).

## Claims

1. Gas-tight waveguide coupling (100) for coupling an electromagnetic signal from a high-frequency module (701) into a waveguide (104, 105), the waveguide coupling comprising:
a planar radiator element (102), which is arranged on a carrier (101) and is used for emitting the signal;
a housing (106, 107, 108), which is connected in a gas-tight manner with the carrier (101) and comprises a waveguide (104, 105), which is configured for transmitting the emitted signal;
wherein the waveguide (104, 105) comprises a start region and, connected subsequent thereto, a main region with constant internal diameter, which comprises a dielectric sealing element (111), which seals off the waveguide (104, 105) in a gas-tight manner.

2. Waveguide coupling according to claim 1,
wherein the dielectric sealing element (111) is made from a circuit board.

3. Waveguide coupling according to any one of the preceding claims,
wherein the dielectric sealing element (111) is a cylindrical or rectangular plastics material part.

4. Waveguide coupling according to any one of the preceding claims
wherein the dielectric sealing element (111) is a cone-shaped, pyramidal, double-cone-shaped or double-pyramidal plastic material part, which moreover has a cylindrical or rectangular region, on which the sealing element is connected in a gas-tight manner to the waveguide.

5. Waveguide coupling according to any one of the preceding claims,
wherein the dielectric sealing element (111) comprises a stepped surface.

6. Waveguide coupling according to any one of the preceding claims,
wherein the region of the sealing element (111) in which the sealing element is connected to the waveguide in a gas-tight manner comprises a metal coating, so as to form a gas-tight soldered or adhesive connection to the waveguide (105).

7. Waveguide coupling according to any one of the preceding claims,
wherein the sealing element (111) comprises a secondary radiator (121), which is feed by the planar radiator element (102) and emits the corresponding signal into the waveguide.

8. Waveguide coupling according to any one of the preceding claims,
wherein the waveguide (104, 105) is configured for transmitting the emitted signal from a volume defined by a start region (104) of the waveguide along a volume defined by a main region (105) of the waveguide;
wherein the planar radiator element (102) is arranged in or immediately upstream from the start region (104);
wherein the internal diameter (123) of the start region (104) of the waveguide in the transition region to the main region of the waveguide is the same as the internal diameter (123) of the main region, and becomes larger towards the planar radiator element.

9. Waveguide coupling according to claim 8,
wherein the diameter (125) of the planar radiator element is greater than the internal diameter (123) of the main region of the waveguide (104, 105).

10. Waveguide coupling according to any one of the preceding claims,
wherein the waveguide is integrated into the housing (106, 107, 108) and wherein the housing (106, 107, 108) and the waveguide (104, 105) are formed in one piece.

11. High-frequency module (701) for generating a measurement signal for a fill-level measurement device (700), the high-frequency module comprising:
a waveguide coupling (100) according to any one of claims 1 to 10.

12. Fill-level radar (700) comprising a high-frequency module according to claim 11.

13. Use of a waveguide coupling (100) according to any one of claims 1 to 10 in a field device (700).

## Revendications

1. Couplage de guide d'ondes étanche au gaz (100) pour injecter un signal électromagnétique provenant d'un module à haute fréquence (701) dans un guide d'ondes (104, 105), le couplage de guide d'ondes comportant :
un élément rayonnant plan (102) agencé sur un support (101) et servant au rayonnement du signal,
un boîtier (106, 107, 108, 114) relié au support (101) de manière étanche au gaz et comportant un guide d'ondes (104, 105) mis en oeuvre de manière à transmettre le signal rayonné,
dans lequel le guide d'ondes (104, 105) comporte une zone initiale et une zone principale adjacente à celle-ci ayant un diamètre intérieur constant, laquelle comporte un élément d'étanchéité diélectrique (111) qui étanchéifie le guide d'ondes (104, 105) de manière étanche au gaz.

2. Couplage de guide d'ondes selon la revendication 1,
dans lequel l'élément d'étanchéité diélectrique (111) est fabriqué à partir d'une carte à circuit imprimé.

3. Couplage de guide d'ondes selon l'une des revendications précédentes,
dans lequel l'élément d'étanchéité diélectrique (111) est une pièce en matière plastique de forme cylindrique ou rectangulaire.

4. Couplage de guide d'ondes selon l'une des revendications précédentes,
dans lequel l'élément d'étanchéité diélectrique (111) est une pièce en matière plastique de forme conique, pyramidale, biconique ou bipyramidale, laquelle comporte en outre une zone cylindrique ou rectangulaire où l'élément d'étanchéité est relié au guide d'ondes de manière étanche au gaz.

5. Couplage de guide d'ondes selon l'une des revendications précédentes,
dans lequel l'élément d'étanchéité diélectrique (111) comporte une surface étagée.

6. Couplage de guide d'ondes selon l'une des revendications précédentes,
dans lequel la zone de l'élément d'étanchéité (111) où l'élément d'étanchéité est relié au guide d'ondes de manière étanche au gaz comporte un revêtement métallique afin de former un assemblage étanche au gaz brasé ou collé avec le guide d'ondes (105).

7. Couplage de guide d'ondes selon l'une des revendications précédentes, dans lequel l'élément d'étanchéité (111) comporte un élément rayonnant secondaire (121) qui est alimenté par l'élément rayonnant plan (102) et qui rayonne ensuite le signal correspondant dans le guide d'ondes.

8. Couplage de guide d'ondes selon l'une des revendications précédentes,
dans lequel le guide d'ondes (104, 105) est mis en oeuvre de manière à transmettre le signal rayonné à partir d'un volume défini par une zone initiale (104) du guide d'ondes le long d'un volume défini par une zone principale (105) du guide d'ondes,
dans lequel l'élément rayonnant plan (102) est agencé dans ou directement avant la zone initiale (104),
dans lequel un diamètre intérieur (123) de la zone initiale (104) du guide d'ondes a, dans la zone de transition jusqu'à la zone principale du guide d'ondes, la même grandeur qu'un diamètre intérieur (123) de la zone principale, et est supérieur à celui de l'élément rayonnant plan.

9. Couplage de guide d'ondes selon la revendication 8,
dans lequel le diamètre (125) de l'élément rayonnant plan est supérieur au diamètre intérieur (123) de la zone principale du guide d'ondes (104, 105).

10. Couplage de guide d'ondes selon l'une des revendications précédentes,
dans lequel le guide d'ondes (104, 105) est intégré au boîtier (106, 107, 108) et dans lequel le boîtier (106, 107, 108) et le guide d'ondes (104, 105) sont réalisés d'un seul tenant.

11. Module à haute fréquence (701) destiné à générer un signal de mesure pour un appareil de mesure de niveau (700), le module à haute fréquence comportant :
un couplage de guide d'ondes (100) selon l'une des revendications 1 à 10.

12. Radar de niveau (700) ayant un module à haute fréquence selon la revendication 11.

13. Utilisation d'un couplage de guide d'ondes (100) selon l'une des revendications 1 à 10 dans un appareil de terrain (700).
